(19) Europäisches Patentamt
European Patent Office
Office européen des brevets

(11) EP 1 796 282 B1

(12) EUROPEAN PATENT SPECIFICATION

(45) Date of publication and mention
of the grant of the patent:
**26.05.2010 Bulletin 2010/21**

(51) Int Cl.:
$H04B\ 3/32^{(2006.01)}$          $H04B\ 3/46^{(2006.01)}$
$H04L\ 5/14^{(2006.01)}$          $G06T\ 9/00^{(2006.01)}$

(21) Application number: **05292663.1**

(22) Date of filing: **08.12.2005**

(54) **Method and apparatus for identifying crosstalk sources**

Verfahren und Vorrichtung zur Identifikation von Übersprecherquellen

Methode et dispositif pour l'identification des sources de diaphonie

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.06.2007 Bulletin 2007/24**

(73) Proprietor: **Alcatel Lucent**
**75008 Paris (FR)**

(72) Inventors:
• **Verlinden, Jan Sylvia**
**2160 Wommelgem (BE)**
• **La Fauci, Margherita**
**2000 Antwerp (BE)**
• **Popov, Igor**
**2640 Mortsel (BE)**
• **Pizurica, Veselin**
**9000 Gent (BE)**

(74) Representative: **Narmon, Gisèle Marie Thérèse**
**Alcatel Bell N.V.**
**Intellectual Property Department**
**Copernicuslaan 50**
**2018 Antwerpen (BE)**

(56) References cited:
WO-A-02/058315          WO-A-02/087186
US-A- 6 055 297          US-A1- 2003 112 967

• GALLI S ET AL: "Multiuser channel estmation: finding the best sparse representation of crosstalk on the basis of overcomplete dictionapies" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, vol. VOL. 1 OF 3, 17 November 2002 (2002-11-17), pages 1213-1217, XP010636338 ISBN: 0-7803-7632-3
• GALLI S ET AL: "A FREQUENCY-DOMAIN APPROACH TO CROSSTALK IDENTIFICATION IN XDSL SYSTEMS" IEEE JOURNAL ON SELECTED AREAS IN COMMUNICATIONS, IEEE SERVICE CENTER, PISCATAWAY, NJ, US, vol. 19, no. 8, August 2001 (2001-08), pages 1497-1506, XP001110567 ISSN: 0733-8716
• GALLI S ET AL: "THE PROBLEM OF SUMMING CROSSTALK FROM MIXED SOURCES" IEEE COMMUNICATIONS LETTERS, IEEE SERVICE CENTER, PISCATAWAY, NJ, US, vol. 4, no. 11, November 2000 (2000-11), pages 325-327, XP001009005 ISSN: 1089-7798

**Description**

The present invention relates to a method for identifying a crosstalk source interfering with a subscriber line, and comprising the step of collecting noise measurements performed over said subscriber line at consecutive time instances.

such a method is disclosed in an article entitled "Multiuser Channel Estimation: Finding the Best Sparse Representation of Crosstalk on the Basis of overcomplete Dictionaries" from S. Galli et al., published in IEEE Globecom conference paper, Taipei, Taiwan, Nov. 17-21, 2002.

An important case of multiuser channel estimation is considered here, the problem of identifying the crosstalk that disturbs a Digital Subscriber Line (DSL) signal. crosstalk originates from signals transmitted on nearby pairs in a telephone cable, and couples over unknown pair-to-pair crosstalk coupling channels into the pair carrying the signal. While crosstalk is generally the dominant impairment for current DSL systems, only recently have papers appeared addressing the problem of multiuser crosstalk channel estimation. For instance, it was proposed to identify crosstalk sources by finding the maximum correlation with a "basis set" (dictionary) of representative measured coupling functions. It is shown here that this can be considered equivalent to finding an optimal sparse representation of a vector from an overcomplete set of vectors. A well-known algorithm that solves this problem is the Matching Pursuit (MP) algorithm, a greedy algorithm for choosing a subset of vectors from an overcomplete dictionary and finding a linear combination of that subset which approximates a given signal vector. A method based on Singular value Decomposition (SVD) for reducing the size of the dictionary is also discussed.

The proposed algorithm is not suitable when a large amount of measurement samples is to be dealt with. Having to match all the measurements with a database of crosstalk models is not feasible, or will at least consume a lot of processing resources.

It is an object of the present invention to improve processing of large amount of measurement samples, while improving identification of crosstalk sources.

According to the invention, this object is achieved due to the fact that said method further comprises the steps of:

- classifying said noise measurements into distinct measurement collections corresponding to respective ones of distinct crosstalk environments,
- time-averaging over a particular measurement collection, thereby yielding a particular time-averaged noise measurement,
- identifying said crosstalk source from said particular time-averaged noise measurement.

A measurement collection includes measurements that have been performed on a line at successive time instances (or instants), and which feature similar noise characteristics, which noise characteristics being indicative of a particular crosstalk environment. The time-averaged value of a particular measurement collection is then digitally processed (e.g., versus a basis set of canonical crosstalk models) in order to identify one or more particular crosstalk source (or disturber), which crosstalk source injecting a noisy signal into the line through a crosstalk coupling channel.

By classifying the measurement samples into distinct subsets of measurements, each subset corresponding to a substantially uniform crosstalk environment, and by averaging the measurements over each subset, the number of times the crosstalk measurements need to be matched with a database of crosstalk models is greatly reduced, and the accuracy of the crosstalk identification algorithm is enhanced.

An alternative embodiment of a method according to the invention is characterized in that said measurement collections comprise an unusable measurement collection corresponding to the absence of substantial crosstalk over said subscriber line, and at least one usable measurement collection corresponding to the presence of substantial crosstalk over said subscriber line, which particular measurement collection being selected out of said at least one usable measurement collection.

By distinguishing between noise measurements - further referred to as unusable measurements - that have been carried out on a line while no substantial crosstalk is present on this line, that is to say while no crosstalk source is substantially disturbing (or interfering with) this line, and remaining noise measurements - further referred to as usable measurements - that have been carried out on the same line while some substantial crosstalk is present on this line, or alternatively while one or more crosstalk source is substantially disturbing this line, one achieves a high degree of simplification in identifying a potential disturber. Unusable measurements can be discarded without any further processing, thereby saving further processing resources.

A further embodiment of a method according to the invention further comprises the step of time-averaging over respective ones of said at least one usable measurement collection, thereby yielding at least one time-averaged noise measurement,

and is further characterized in that said at least one time-averaged noise measurement is computed and updated as new noise measurements are pushed into said at least one usable measurement collection.

Memory requirements for implementing such a method are considerably relaxed as individual measurement samples do not need to be held in memory.

Still a further embodiment of a method according to the invention is characterized in that the step of classifying said noise measurements comprises the step of comparing said noise measurements with said at least one time-averaged noise measurements.

Cross-correlation function can be used to quantify similarities between newly received noise measurements and the at least one time-averaged noise measurements, and to determine whether a noise measurement fits into the current set of measurement collections or whether a new measurement collection needs to be created purposely.

This embodiment is particularly advantageous in that the classification step relies upon the same time-averaged values as the identification step does, thereby greatly simplifying its implementation.

Another embodiment of a method according to the invention is characterized in that the step of classifying said noise measurements comprises the step of detecting a distinguishable feature within a noise measurement that characterizes a particular crosstalk environment.

crosstalk usually varies with frequency, whereas white noise does not. So, the spectrum shape of a noise measurement can be analyzed to determine whether that measurement is likely to contain crosstalk from whatever disturber (before actually identifying the disturber).

For instance, variance (or standard deviation) of noise over frequency is helpful for determining whether a noise sample contains some substantial crosstalk.

One may also look at particular spectrum features, such as the frequencies at which downwards peaks appear, which frequencies being typical of a particular type of crosstalk disturber.

Alternatively, power or amplitude (e.g., root mean square or r.m.s. value) of noise samples can be compared against threshold values. Threshold values can be pre-determined or computed on the fly.

Still a further embodiment of a method according to the invention is characterized in that the step of classifying said noise measurements comprises the step of analyzing variations of said noise measurements over time.

variations of noise over time are usually indicative of the appearance or disappearance of a disturber. By comparing measurement samples against each other, new crosstalk environments can be detected.

As an example, when the summation of differences per frequency between two measurement samples is above a certain threshold, they belong to different sets.

Variations of noise over time can also be analyzed to select the most appropriate (or representative) measurement samples. As an example, power threshold values can be computed according to the observed power variation range (as characterized by a mean and a variance value, or by a minimum and a maximum value) so as to retain the best measurement samples for the identification step.

The present invention also relates to a network analyzer adapted to identify a crosstalk source interfering with a subscriber line, and comprising a collecting unit adapted to collect noise measurements performed over said subscriber line at successive time instances.

A network analyzer according to the invention further comprises:

- a crosstalk sensor coupled to said collecting unit, and adapted to classify said noise measurements into distinct measurement collections corresponding to respective ones of distinct crosstalk environments,
- an averaging unit coupled to said crosstalk sensor, and adapted to time-average over a particular measurement collection, thereby yielding a particular time-averaged noise measurement,
- a crosstalk identification unit coupled to said averaging unit, and adapted to identify said crosstalk source from said particular time-averaged noise measurement.

Embodiments of a network analyzer according to the invention correspond with the embodiments of a method according to the invention.

It is to be noticed that it is indifferent at which extent classification is done, meaning how far crosstalk environments are distinguished one from another, ranging from basic classification (e.g., with or without crosstalk) to accurate crosstalk differentiation.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Finally, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:

- fig. 1 represents a communication system,
- fig. 2 represents a network analyzer according to the present invention,
- fig. 3A, 3B and 3C represent noise measurement samples related to distinct crosstalk environments.

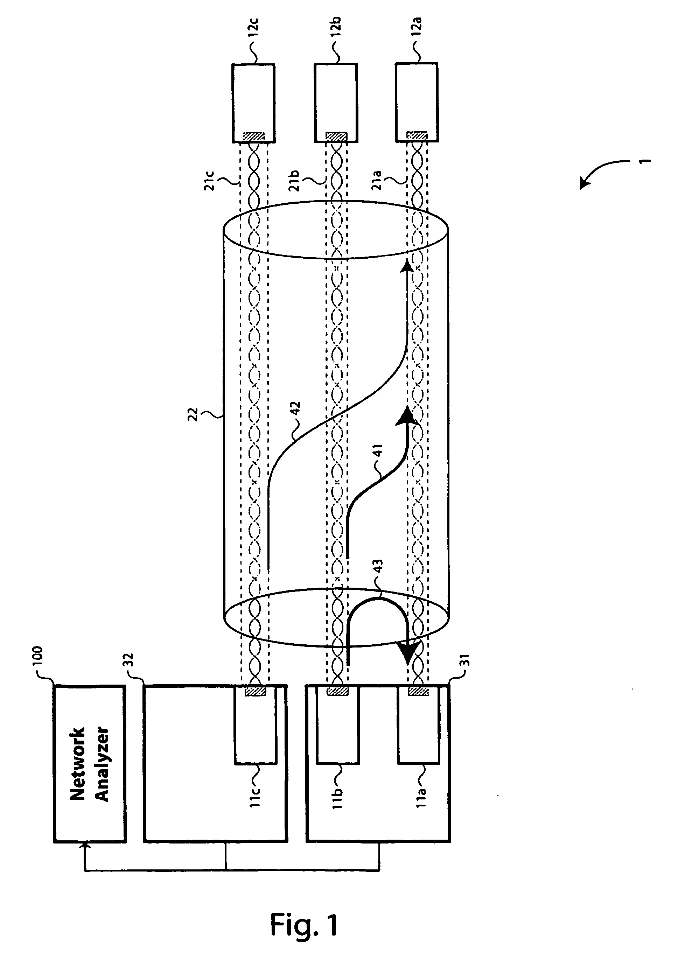

There is seen in fig. 1 a communication system 1 comprising:

- access units 31 and 32 at a central office accommodating transceiver units 11a, 11b and 11c,
- transceiver units 12a, 12b and 12c at customer premises,
- a network analyzer 100.

In a preferred embodiment of the present invention, the data communication system 1 is DSL-based. The access units 31 and 32 are for instance Digital subscriber Line Access Multiplexers (DSLAM) at a central office that supports DSL services (ADSL, ADSL2+, VDSL, HDSL, SHDSL, etc) for providing broadband access to subscribers. The transceiver units 11 and 12 are DSL transceiver units. The transceiver unit 12a is for instance a DSL modem, the transceiver unit 12b is for instance a network interface card forming part of a user terminal such as a Personal computer (PC), and the transceiver unit 12c is for instance a set top box.

Yet, the scope of the present invention is not limited to DSL-based communication systems. The present invention is applicable to whatever type of digital or analog communication systems wherein crosstalk is a predominant source of noise.

The transceiver units 11a, 11b and 11c are coupled to the transceiver units 12a, 12b and 12c via twisted pairs 21a, 21b and 21c respectively. The twisted pairs 21a, 21b and 21c are enclosed within the same binder 22.

The network analyzer 100 is coupled to the access units 31 and 32 via e.g. a data communication network (not shown).

The line 21a, which is assumed to be the victim line, is disturbed by far-end and/or near-end crosstalk. As an illustrative example, far-end crosstalk 41 and 42 originate from transmitters 11b and 11c respectively, and couple into receiver 12a, while near-end crosstalk 43 originates from transmitter 11b and couples into receiver 11a (as forming part of the same equipment 31).

For identifying a crosstalk source disturbing the operation of the victim line 21a, the network analyzer 100 collects noise measurements from both transceiver units 11a (upstream measurement) and 12a (downstream measurements).

In a preferred embodiment of the present invention, noise measurements are noise Power Spectral Density (PSD) measurements.

Noise measurements are typically carried out while a communication path is being initialized (e.g., for determining respective bit loading of DSL carriers). Noise measurements may also be performed during normal operation (also known as show time), or during a specific diagnostic mode.

Measurement pre-processing (e.g., time-averaging consecutive measurement samples for reducing the reporting throughput, converting measurement samples from the time domain to the frequency domain, etc) may take place in the transceiver units 11 or 12, and/or in the access units 31 or 32, and/or in the network analyzer 100.

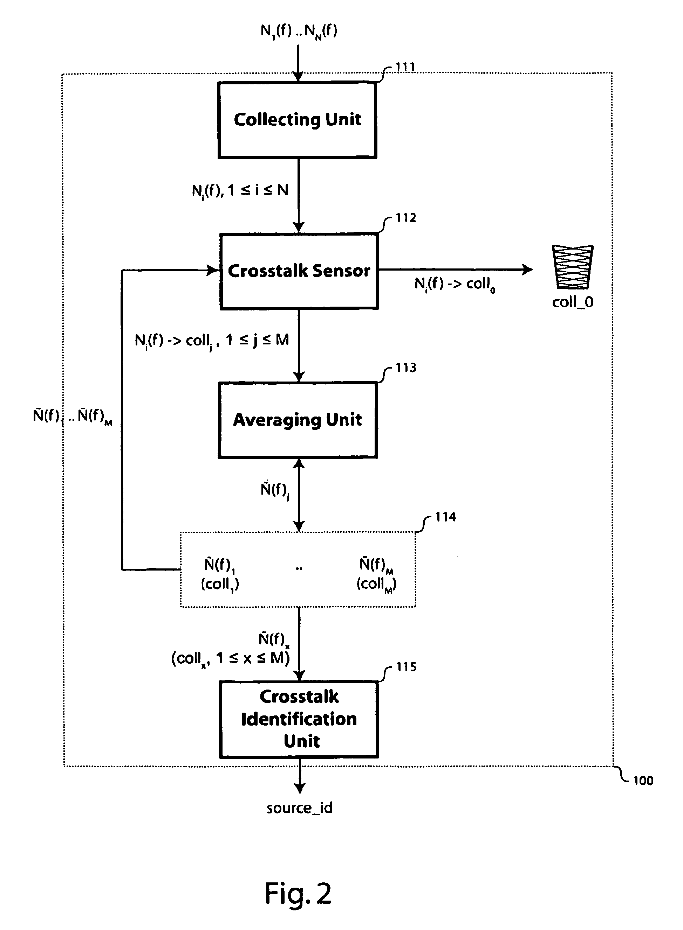

There is seen in fig. 2 a preferred embodiment of the network analyzer 100 comprising:

- a collecting unit 111,
- a crosstalk sensor 112,
- an averaging unit 113,
- a storage area 114,
- a crosstalk identification unit 115.

An output of the collecting unit 111 is coupled to an input of the crosstalk sensor 112. An output of the crosstalk sensor 112 is coupled to an input of the averaging unit 113. An output of the averaging unit 113 is coupled via the memory area 114 to an input of the crosstalk sensor 112 and to an input of the crosstalk identification unit 115.

The collecting unit 111 is adapted to collect noise measurements performed by transceiver units, being upstream measurements performed at a central office, or downstream measurements performed at customer premises.

The crosstalk sensor 112 is adapted to classify noise measurements into distinct measurement collections corresponding to distinct crosstalk environments.

In a preferred embodiment of the present invention, the crosstalk sensor 112 checks whether a newly-received noise PSD measurement is likely to contain some substantial crosstalk by computing the noise PSD variance (or standard deviation) over frequency. A noise measurement is classified into an unusable measurement collection (see $coll_0$ in fig. 2) if the so-computed variance is below a first threshold T1. Else, the noise measurement is likely to contain some substantial crosstalk, and the crosstalk sensor 112 computes the cross-correlation summation between the noise PSD measurement and the time-averaged noise PSD of each and every usable measurement collection (see $coll_1$ to $coll_M$ in fig. 2), as read from the storage area 114 . The noise measurement is classified into the measurement collection with the best match provided the corresponding cross-correlation summation is above a second threshold T2, else a new measurement collection is created.

The averaging unit 113 is adapted to time-average over each and every usable measurement collection. The corresponding time-averaged noise PSDs are written into the storage area 114. The time-averaged noise PSD of a measurement collection is updated whenever a new measurement sample is classified into this collection.

The crosstalk identification unit 115 is adapted to identify a particular crosstalk source from a particular time-averaged noise PSD, as read from the storage area 114. The identification algorithm makes use of a basis set of crosstalk models, yet other crosstalk identification methods as known to the person skilled in the art could be used as well. A particular crosstalk disturber is identified (see source_id in fig. 2) as the outcome of the crosstalk identification algorithm.

An operation of the preferred embodiment follows.

Let $N_1(f)$ to $N_N(f)$ denote the downstream noise PSD measurements performed over the line 21a by the transceiver unit 12a at successive time instances, and reported via the access unit 31 to the network analyzer 100. Let $N_i(f)$ be the noise PSD measurement that is currently being processed, i being a time index ranging from 1 to N.

The crosstalk sensor 112 first determines whether $N_i(f)$ is likely to contain some substantial crosstalk by computing the variance of $N_i(f)$ over the applicable frequency range, and by comparing the so-computed variance to the threshold T1.

Let $f_1$ to $f_L$ denote the frequency range of interest (presently, the downstream frequency range), and let k denote a frequency index ranging from 1 to L.

Let $\mu_i$ and $\sigma^2_i$ denote the mean and bias-corrected variance of $N_i(f)$ over frequency:

$$\mu_i = \frac{\sum_{k=1}^{L} N_i(f_k)}{L} \quad (1)$$

$$\sigma^2_i = \frac{\sum_{k=1}^{L} [N_i(f_k) - \mu_i]^2}{L-1} \quad (2)$$

If $\sigma^2_i \leq T1$ then $N_i(f)$ is classified into collection $coll_0$ and is silently discarded (see $N_i(f) \rightarrow coll_0$ in fig. 2), else $N_i(f)$ is likely to contain some substantial crosstalk and a further classification is carried out.

If $\sigma^2_i > T1$ then the crosstalk sensor 112 computes the cross-correlation summation between $N_i(f)$ and the time-averaged noise PSD of each and every usable collection.

The threshold T1 can be set to a pre-determined value, in which case the variance needs to be normalized first, or can be computed on the fly (e.g., as a ratio of the squared mean value).

Let $coll_1$ to $coll_M$ denote the set of usable collections that is currently defined at time index i, and let $\tilde{N}(f)_j$ denote the time-averaged noise PSD of collection $coll_j$, j being a collection index ranging from 1 to M:

$$\tilde{N}(f_k)_j = \frac{\sum_{N_i \in coll_j} N_i(f_k)}{Z_j} \quad (3)$$

wherein $Z_j$ denotes the total number of measurement samples that has been classified into collection $coll_j$ (updated by the averaging unit 113).

Let $\tilde{\mu}_j$ and $\tilde{\sigma}^2_j$ denote the mean and bias-corrected variance of $\tilde{N}(f)_j$ over frequency:

$$\tilde{\mu}_j = \frac{\sum_{k=1}^{L} \tilde{N}(f_k)_j}{L} \quad (4)$$

$$\tilde{\sigma}_j^2 = \frac{\sum_{k=1}^{L} [\tilde{N}(f_k)_j - \tilde{\mu}_j]^2}{L-1} \quad (5)$$

The cross-correlation summation $\phi_{ij}$ between $N_i(f)$ and $\tilde{N}(f)j$ is defined as:

$$\phi_{ij} = \frac{\frac{1}{L}\sum_{k=1}^{L} [N_i(f_k) - \mu_i] \times [\tilde{N}(f_k)_j - \tilde{\mu}_j]}{\sqrt{\sigma_i^2} \times \sqrt{\tilde{\sigma}_i^2}} \quad (6)$$

The noise PSD measurement $N_i(f)$ is classified into the collection, the cross-correlation summation of which is the highest and is greater than or equal to the threshold T2 (see $N_i(f)$ -> $coll_j$ in fig. 2), else a new usable measurement collection is created (presently, $coll_{M+1}$). A typical value for the threshold T2 is 0,80.

The averaging unit 113 then updates the time-averaged PSD of collection $coll_j$, wherein the newly-received measurement sample $N_i(f)$ has been pushed:

$$\tilde{N}(f_k)_j \Leftarrow \frac{[z_j \times \tilde{N}(f_k)_j] + N_i(f_k)}{z_j + 1} , k = 1..L \quad (7)$$

$$z_j \Leftarrow z_j + 1 \quad (8)$$

Next, the crosstalk identification unit 115 selects a particular measurement collection $coll_x$, x being a collection index ranging from 1 to M. For instance, the collection with the highest amount of measurement samples, or the collection with the most recent measurement samples, is selected.

Finally, the crosstalk identification unit 115 identifies a particular crosstalk source from the time-averaged noise PSD $\tilde{N}(f)x$ of this particular collection, as updated by the averaging unit 113. A crosstalk source may be identified by its type (e.g., ADSL) and by its proximity with respect to the victim line 21a.

Further measurement collections can be selected for identifying further crosstalk sources. For instance, a low-disturbing and always-on crosstalk source is identified from the largest measurement collection, while a high-disturbing yet occasional crosstalk source is further identified from another measurement collection.

The description would apply similarly to upstream measurements performed by the transceiver unit 11a.

In an alternative embodiment of the present invention, the measurement samples $N_1(f)$ .. $N_N(f)$ are classified and individually stored into the storage area 114. In a further step, the averaging unit 113 computes the time-averaged PSD value of a particular collection collx, and provides the so-computed value to the crosstalk identification unit 115 for further identification.

In a further embodiment of the present invention, the crosstalk sensor 112 computes the power value of a measurement sample $N_i(f)$ within a given frequency band, and compares the so-computed value to a pre-determined threshold so as to determine whether this noise sample is likely to contain some substantial crosstalk (white noise floor is typically about -140 dBm).

The crosstalk sensor 112 may also look to the difference between the minimum and maximum values of $N_i(f)$ over frequency, or may look to the frequency slope of $N_i(f)$, or may compute the cross-correlation summation of $N_i(f)$ with a white noise reference PSD.

In still a further embodiment of the present invention, the crosstalk sensor 112 looks at particular spectrum features within the measurement sample $N_i(f)$.

For example, the crosstalk sensor 112 determines the frequencies at which downwards peaks (or local minima) appear, which frequencies being typical of a particular disturber type, and classifies the measurement samples accordingly.

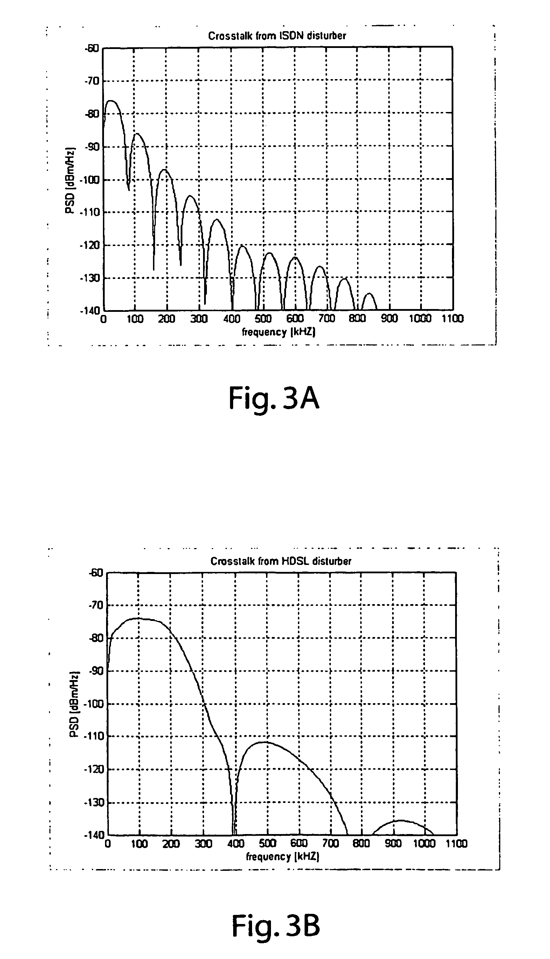

As a first example, there is seen in fig. 3A a noise PSD measurement sample carried out at customer premises over a victim line (length = 1 km) disturbed by an Integrated Services Digital Network (ISDN) disturber, and wherein the downwards peaks repeat every 80 kHz.

As a second example, there is seen in fig. 3B a noise PSD measurement sample carried out at customer premises over a victim line (length = 1 km) disturbed by an HDSL disturber, and wherein the downwards peaks repeat every 400 kHz.

The crosstalk sensor may also look to other spectrum features, such as a spectrum rising/falling edge, etc.

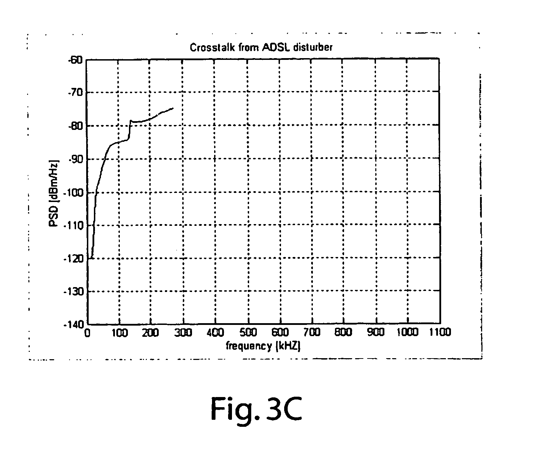

As a last example, there is seen in fig. 3c a noise PSD measurement sample carried out at a central office over a victim line (length = 2 km) disturbed by an ADSL disturber. There is a sudden raise in noise PSD around 138 kHz, which is typical of near-end crosstalk originating from an ADSL transceiver type (the ADSL upstream band ranges from 25.875 kHz to 138 kHz, and the ADSL downstream band ranges from 138 kHz to 1104 kHz).

In still a further embodiment, the crosstalk sensor 112 compares measurement samples against each other to determine whether they relate to the same or to distinct crosstalk environment.

For example, the crosstalk sensor 112 computes the summation $\Delta_p$ of differences per frequency between $N_i$ (f) and a prior measurement $N_{i-p}(f)$:

$$\Delta_p = \sum_{k=1}^{L} |N_i(f_k) - N_{i-p}(f_k)| \quad (9)$$

If the difference is below a third threshold T3, then $N_i(f)$ is classified into the same collection as $N_{i-p}(f)$, else a new measurement collection is created.

As an improvement, the crosstalk sensor 112 may wait for several consecutive measurements with very low inter-variations before creating a new measurement collection.

Alternatively, the crosstalk sensor 112 could compute the cross-correlation summation between $N_i(f)$ and a prior measurement $N_{i-p}(f)$ so as to determine whether they relate to the same crosstalk environment or not.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

**Claims**

**1.** A method for identifying a crosstalk source (11b; 11c) interfering with a subscriber line (21a), and comprising the step of collecting noise measurements ($N_1(f) .. N_N(f)$) performed over said subscriber line at successive time instances,

**characterized in that** said method further comprises the steps of:

- classifying said noise measurements into distinct measurement collections (collo .. $coll_M$) corresponding to respective ones of distinct crosstalk environments,
- time-averaging over a particular measurement collection ($coll_x$), thereby yielding a particular time-averaged noise measurement ($\tilde{N}(f)_x$),
- identifying said crosstalk source from said particular time-averaged noise measurement.

**2.** A method according to claim 1, **characterized in that** said measurement collections comprise an unusable measurement collection (collo) corresponding to the absence of substantial crosstalk over said subscriber line, and at least one usable measurement collection ($coll_1 .. coll_M$) corresponding to the presence of substantial crosstalk over said subscriber line, which particular measurement collection being selected out of said at least one usable measurement collection.

**3.** A method according to claim 2, **characterized in that** said method further comprises the step of time-averaging over respective ones of said at least one usable measurement collection, thereby yielding at least one time-averaged noise measurement ($\tilde{N}(f)_1 .. \tilde{N}(f)_M$),

*and **in that*** said at least one time-averaged noise measurement is computed and updated as new noise measurements are pushed into said at least one usable measurement collection.

4. A method according to claim 3, ***characterized in that*** the step of classifying said noise measurements comprises the step of comparing said noise measurements with said at least one time-averaged noise measurements.

5. A method according to claim 1, ***characterized in that*** the step of classifying said noise measurements comprises the step of detecting a distinguishable feature within a noise measurement that characterizes a particular crosstalk environment.

6. A method according to claim 1, ***characterized in that*** the step of classifying said noise measurements comprises the step of analyzing variations of said noise measurements over time.

7. A network analyzer (100) adapted to identify a crosstalk source (11b; 11c) interfering with a subscriber line (21a), and comprising a collecting unit (111) adapted to collect noise measurements ($N_1(f) .. N_N(f)$) performed over said subscriber line at successive time instances,
   ***characterized in that*** said network analyzer comprises:

   - a crosstalk sensor (112) coupled to said collecting unit, and adapted to classify said noise measurements into distinct measurement collections ($coll_0 .. coll_M$) corresponding to respective ones of distinct crosstalk environments,
   - an averaging unit (113) coupled to said crosstalk sensor, and adapted to time-average over a particular measurement collection ($coll_x$), thereby yielding a particular time-averaged noise measurement ($\tilde{N}(f)_x$),
   - a crosstalk identification unit (115) coupled to said averaging unit, and adapted to identify said crosstalk source from said particular time-averaged noise measurement.


**Patentansprüche**

1. Ein Verfahren zum Identifizieren einer Übersprechquelle (11b; 11c), welche eine Störung auf einer Teilnehmerleitung (21a) verursacht, wobei das Verfahren den auf der besagten Teilnehmerleitung zu aufeinanderfolgenden Zeitpunkten ausgeführten Schritt des Sammelns von Rauschmessungen ($N_1(f) .. N_N(f)$) umfasst,
   ***dadurch gekennzeichnet, dass*** das besagte Verfahren die folgenden Schritte umfasst:

   - Klassifizieren der besagten Rauschmessungen in verschiedene Messungssammlungen ($coll_0 .. coll_M$), welche den jeweiligen verschiedenen Übersprechumgebungen entsprechen,
   - zeitliche Mittelung einer bestimmten Messungssammlung ($coll_X$), wodurch eine bestimmte zeitlich gemittelte Rauschmessung ($\tilde{N}(f)_x$) erzielt wird,
   - Identifizieren der besagten Übersprechquelle anhand der bestimmten zeitlich gemittelten Rauschmessung.

2. Ein Verfahren nach Anspruch 1, ***dadurch gekennzeichnet, dass*** die besagten Messungssammlungen eine unverwertbare Messungssammlung ($coll_0$), welche dem Nichtvorhandensein einer wesentlichen Übersprechung auf der besagten Teilnehmerleitung entspricht, und mindestens eine verwertbare Messungssammlung ($coll_1  coll_M$), welche dem Vorhandensein einer wesentlichen Übersprechung auf der besagten Teilnehmerleitung entspricht, umfassen, wobei diese bestimmte Messungssammlung aus der besagten mindestens einen verwertbaren Messungssammlung gewählt wird.

3. Ein Verfahren nach Anspruch 2, ***dadurch gekennzeichnet, dass*** das besagte Verfahren weiterhin den Schritt der zeitlichen Mittelung der besagten entsprechenden mindestens einen verwertbaren Messungssammlung umfasst, wodurch mindestens eine zeitliche gemittelte Rauschmessung ($\tilde{N}(f)_1 .. \tilde{N}(f)_M$) erzielt wird,
   *und dass* die besagte mindestens eine zeitlich gemittelte Rauschmessung kalkuliert und aktualisiert wird, sobald neue Rauschmessungen in die besagte mindestens eine verwendbare Messungssammlung eingefügt werden.

4. Ein Verfahren nach Anspruch 3, ***dadurch gekennzeichnet, dass*** der Schritt des Klassifizierens der besagten Rauschmessungen den Schritt des Vergleichens der besagten Rauschmessungen mit der besagten mindestens einen zeitlich gemittelten Rauschmessung umfasst.

5. Ein Verfahren nach Anspruch 1, ***dadurch gekennzeichnet, dass*** der Schritt des Klassifizierens der besagten Rauschmessungen den Schritt des Erkennens einer unterscheidbaren Eigenschaft in einer Rauschmessung, welche eine bestimmte Übersprechumgebung kennzeichnet, umfasst.

6. Ein Verfahren nach Anspruch 1, *dadurch gekennzeichnet, dass* der Schritt des Klassifizierens der besagten Rauschmessungen den Schritt des Analysierens von Abweichungen der besagten Rauschmessungen in der Zeit umfasst.

7. Ein Netzwerkanalysator (100), welcher dazu ausgelegt ist, eine Übersprechquelle (11 b; 11c), welche eine Teilnehmerleitung (21 a) störend beeinflusst, zu identifizieren, und eine Sammeleinheit (111) umfasst, welche dazu ausgelegt ist, auf der besagten Teilnehmerleitung zu aufeinanderfolgenden Zeitpunkten ausgeführte Rauschmessungen ($N_1(f)$ .. $N_N(f)$) zu sammeln,
*dadurch gekennzeichnet, dass* der besagte Netzwerkanalysator umfasst:

- Einen Übersprechsensor (112), welcher an die besagte Sammeleinheit gekoppelt und dazu ausgelegt ist, die besagten Rauschmessungen in verschiedene Messungssammlungen ($coll_0$ .. $coll_M$), welche den jeweiligen verschiedenen Übersprechumgebungen entsprechend, zu klassifizieren,
- eine Mittelungseinheit (113), welche an den besagten Übersprechsensor gekoppelt und dazu ausgelegt ist, eine zeitliche Mittelung einer bestimmten Messungssammlung ($coll_X$) durchzuführen, wodurch eine bestimmte zeitlich gemittelte Rauschmessung ($\tilde{N}(f)_X$) erzielt wird,
- eine Einheit zur Identifikation von Übersprechen (115), welche an die besagte Mittelungseinheit gekoppelt und dazu ausgelegt ist, die besagte Übersprechquelle anhand der besagten bestimmten zeitlich gemittelten Rauschmessung zu identifizieren.

## Revendications

1. Procédé d'identification d'une source de diaphonie (11b ; 11c) interférant avec une ligne d'abonné (21a), et comprenant l'étape de collecte de mesures de bruit ($N_1(f)$ .. $N_N(f)$) réalisées sur ladite ligne d'abonné à des instances temporelles successives,
*caractérisé en ce que* ledit procédé comprend en outre les étapes suivantes :

- classer lesdites mesures de bruit en collections de mesures distinctes ($coll_0$ .. $coll_M$) correspondant à des environnements respectifs parmi des environnements de diaphonie distincts,
- calculer la moyenne temporelle d'une collection de mesures particulière ($coll_X$), produisant ainsi une mesure de bruit à moyenne temporelle particulière ($\tilde{N}(f)_X$),
- identifier ladite source de diaphonie à partir de ladite mesure de bruit à moyenne temporelle particulière.

2. Procédé selon la revendication 1, *caractérisé en ce que* lesdites collections de mesures comprennent une collection de mesures inutilisables ($coll_0$) correspondant à l'absence de diaphonie substantielle sur ladite ligne d'abonné, et au moins une collection de mesures utilisables ($coil_1$ ...$coll_M$) correspondant à la présence de diaphonie substantielle sur ladite ligne d'abonné, ladite collection de mesures particulière étant sélectionnée à partir de ladite au moins une collection de mesures utilisables.

3. Procédé selon la revendication 2, *caractérisé en ce que* ledit procédé comprend en outre l'étape de calcul de moyenne temporelle des collections respectives de ladite au moins une collection de mesures utilisables, produisant ainsi au moins une mesure de bruit à moyenne temporelle ($\tilde{N}(f)_1$ .. $\tilde{N}(f)_M$),
*et en ce que* ladite au moins une mesure de bruit à moyenne temporelle est calculée et mise à jour lorsque de nouvelles mesures de bruit sont insérées dans ladite au moins une collection de mesures utilisables.

4. Procédé selon la revendication 3, *caractérisé en ce que* l'étape de classement desdites mesures de bruit comprend l'étape de comparaison desdites mesures de bruit avec ladite au moins une mesure de bruit à moyenne temporelle.

5. Procédé selon la revendication 1, *caractérisé en ce que* l'étape de classement desdites mesures de bruit comprend l'étape de détection d'une fonctionnalité distincte à l'intérieur d'une mesure de bruit qui caractérise un environnement de diaphonie particulier.

6. Procédé selon la revendication 1, *caractérisé en ce que* l'étape de classement desdites mesures de bruit comprend l'étape d'analyse de variations desdites mesures de bruit dans le temps.

**7.** Analyseur de réseau (100) adapté pour identifier une source de diaphonie (11b ; 11c) interférant avec une ligne d'abonné (21a), et comprenant une unité de collecte (111) adaptée pour collecter des mesures de bruit ($N_1(f)$ .. $N_N$ (f)) réalisées sur ladite ligne d'abonné à des instances temporelles successives,
*caractérisé en ce que* ledit analyseur de réseau comprend :

- un capteur de diaphonie (112) couplé à ladite unité de collecte, et adapté pour classer lesdites mesures de bruit en collections de mesures distinctes ($coll_0$ $coll_M$) correspondant à des environnements respectifs parmi des environnements de diaphonie distincts,
- une unité de calcul de la moyenne (113) couplée audit capteur de diaphonie, et adaptée pour calculer la moyenne temporelle d'une collection de mesures particulière ($coll_X$), produisant ainsi une mesure de bruit à moyenne temporelle particulière ($(f)_X$),
- une unité d'identification de diaphonie (115) couplée à ladite unité de calcul de la moyenne, et adaptée pour identifier ladite source de diaphonie à partir de ladite mesure de bruit à moyenne temporelle particulière.

Fig. 1

$N_1(f) .. N_N(f)$

**Collecting Unit** ⌐111

$N_i(f), 1 \leq i \leq N$

**Crosstalk Sensor** ⌐112

$N_i(f) \rightarrow coll_0$

coll_0

$N_i(f) \rightarrow coll_j, 1 \leq j \leq M$

**Averaging Unit** ⌐113

$\bar{N}(f)_j$

$\bar{N}(f)_1 .. \bar{N}(f)_M$

⌐114

$\bar{N}(f)_1$
$(coll_1)$

..

$\bar{N}(f)_M$
$(coll_M)$

$\bar{N}(f)_x$
$(coll_x, 1 \leq x \leq M)$

**Crosstalk Identification Unit** ⌐115

⌐100

source_id

# Fig. 2

## Fig. 3A

## Fig. 3B

Fig. 3C

**EP 1 796 282 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. GALLI et al.** Multiuser Channel Estimation: Finding the Best Sparse Representation of Crosstalk on the Basis of overcomplete Dictionaries. *IEEE Globecom conference paper,* 17 November 2002